# EUROPÄISCHE PATENTSCHRIFT

(11) **EP 0 296 346 B1**
(45) Veröffentlichungstag und Bekanntmachung des Hinweises auf die Patenterteilung: **29.12.1993**
(21) Anmeldenummer: 88107387.8
(22) Anmeldetag: 07.05.1988
(51) Int. Cl.: B65G 57/00, B65G 61/00

(54) **Verfahren und Vorrichtung zum lagenweisen Beladen von Paletten**
Method and device for charging pallets in layers
Procédé et dispositif pour charger des palettes en couches

(30) Priorität: 25.06.1987 DE 3720933
(43) Veröffentlichungstag der Anmeldung: 28.12.1988
(73) Patentinhaber: Focke & Co. (GmbH & Co.), 27283 Verden (DE)
(72) Erfinder: Focke, Heinz, D-2810 Verden (DE)
(74) Vertreter: Bolte, Erich, Dipl.-Ing.

(56) Entgegenhaltungen:
- DD-A- 113 880
- DE-A- 2 316 134
- US-A- 4 079 645
- PATENT ABSTRACTS OF JAPAN, Band 7, Nr. 133 (M-221)(1278), 10. Juni 1983, & JP-A-58 047725

## Beschreibung

Die Erfindung betrifft ein Verfahren zum lagenweisen Beladen von Paletten oder dergleichen mit stapelbaren Gegenständen, insbesondere Verpackungskartons, mit einem Palettierer, der einen insbesondere heb-, senk-, schwenkbaren und mit wenigstens einem Gelenk versehenen Auslegerarm aufweist, an dessen freiem Ende ein Halteorgan, insbesondere ein Saughalter, zum Erfassen der Gegenstände angeordnet ist, wobei zwischen Lagen der Gegenstände Zwischenlagen, insbesondere aus Papier, eingebracht werden, welche jeweils nach Fertigstellung einer Lage aus Gegenständen positionsgerecht auf die fertige Lage aufgelegt werden, und wobei die Zwischenlagen von einer Materialbahn, insbesondere Papierbahn, hergestellt werden, die von einer Bobine über eine Umlenkstelle abgezogen wird. Weiterhin betrifft die Erfindung eine Vorrichtung zur Durchführung des Verfahrens nach dem Oberbegriff der Anspruchs 5. Ein Solches Verfahren und eine solche Vorrichtung sind dem Fachmann bekannt.

Für die mechanische bzw. automatische Beladung von Paletten werden neuerdings nach Art von Robotern ausgebildete und arbeitende Palettierer eingesetzt. Diese bestehen aus einem Auslegerarm, der an aufrechten Tragsäulen der Höhe nach verfahrbar gelagert ist. Der Auslegerarm ist üblicherweise in mehrere Teilarme aufgeteilt, die durch Gelenke miteinander verbunden sind. Dadurch werden Bewegungsmöglichkeiten des Saughalters geschaffen, die komplexe Handhabungen der Gegenstände beim Ablegen auf der Palette ermöglichen. Die auf der Palette zu stapelnden Verpackungskartons werden an der Oberseite durch den Saughalter erfaßt und unter Bildung einer Kartonlage auf der Palette nebeneinander abgesetzt.

Bei bestimmten Anwendungsfällen ist es erforderlich oder vorteilhaft, zwischen den Lagen der Gegenstände auf der Palette dünne Zwischenlagen, insbesondere aus Papierzuschnitten, einzubringen. Diese haben vor allem die Aufgabe, den Zusammenhalt der Gegenstände innerhalb einer Lage und damit die Stabilität des gesamten Stapels auf der Palette zu verbessern. Die entsprechend der Größe und Gestalt der Palette rechteckigen oder quadratischen Zwischenlagen werden bisher von Hand in Position gebracht.

Aus der US-A-4 079 645 ist eine sich von der nach dem Oberbegriff des Anspruchs 5 leicht untersheidende Vorrichtung zum Stapeln von Fensterscheiben auf einer Palette bekannt der Auslegearm ist nicht heb-, senk-, und schwenkbar. Zwischen die einzelnen Scheiben wird jeweils eine Papierlage gelegt. Diese wird von einer Bobine über eine Umlenkwalze abgezogen und auf der jeweils obersten Lage abgelegt. Die Umlenkwalze ist zum Ausgleich von in der Papierbahn auftretenden Überspannungen vertikal bewegbar. Die Zufuhr der Papierbahn erfolgt stets in derselben Höhe.

Der Erfindung liegt die Aufgabe zugrunde, die Zufuhr der Materialbahn bzw. der entsprechenden Zwischenlage zu erleichtern.

Zur Lösung dieser Aufgabe ist das eingangs genannte Verfahren dadurch gekennzeichnet, daß die Umlenkstelle jeweils auf die Höhe der Ebene der fertiggestellten Kartonlage ausgerichtet wird. Dadurch verläuft der zu fördernde Abschnitt der Materialbahn stets im wesentlichen horizontal und auf dem Niveau der abzudeckenden Lage der Gegenstände. Der Weg ist kurz und kann in kurzer Zeit zurückgelegt werden.

Nach einem weiteren Merkmal der Erfindung werden die Materialbahn bzw. die Zwischenlagen in einer in Förderrichtung der Umlenkstelle nachgeordneten Position von dem Halteorgan erfaßt und positionsgerecht auf die fertige Lage der Gegenstände aufgelegt. Der Auslegerarm mit dem Halteorgan hat demnach eine Doppelfunktion. Zum einen werden nacheinander die Verpackungskartons oder dergleichen lagenweise auf die Palette übertragen. Zum anderen werden aber jeweils nach Fertigstellung einer Lage aus Verpackungskartons die Zwischenlagen von dem Auslegerarm in Position gebracht, wobei das Halteorgan jeweils die Zwischenlage erfaßt.

Die Umlenkstelle ist als Umlenkwalze erfindungsgemäß antreibbar, so daß die wesentliche Zug- und Vorschubkraft durch die Umlenkwalze auf die Materialbahn übertragen wird.

Weitere Merkmale der Erfindung betreffen das Verfahren sowie eine Vorrichtung in Verbindung mit einem Palettierer.

Ein Ausführungsbeispiel der Vorrichtung wird nachfolgend anhand der Zeichnungen näher erläutert. Es zeigt:
- Fig. 1: eine Vorrichtung zum Beladen von Paletten mit dünnen Zwischenlagen in schematischer Seitenansicht,

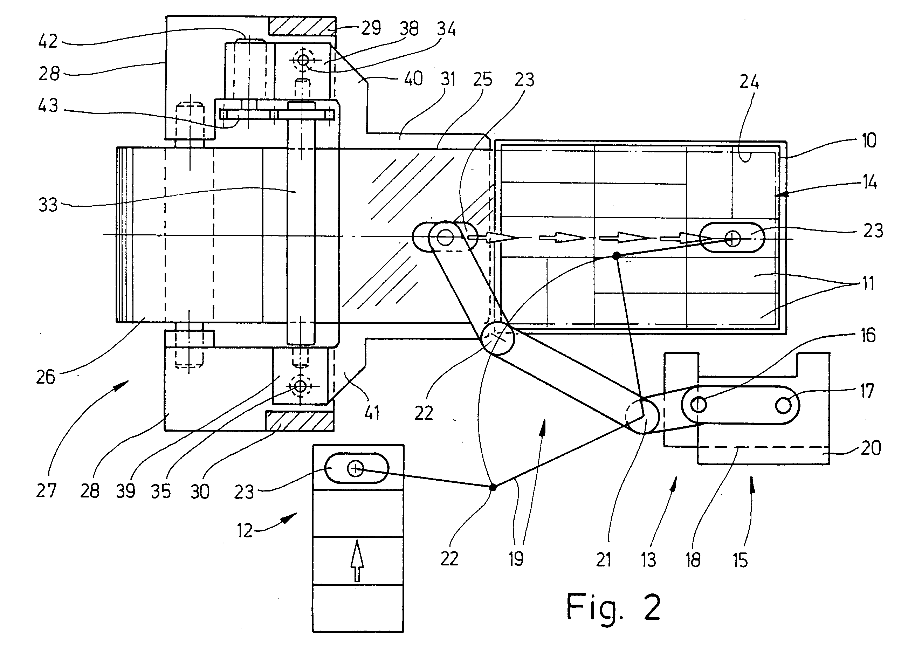

- Fig. 2: einen Grundriß zu der Darstellung der Fig. 1.

Die gezeigte Vorrichtung dient zur Beladung von Paletten 10 mit Kartons 11. Diese quaderförmigen Gegenstände als Verpackungsbehälter werden auf einem nicht näher gezeigten Förderer einer Aufnahmestation 12 in Dichtlage zugeführt. Von dem Förderer werden die Kartons 11 nacheinander durch eine Fördervorrichtung, nämlich durch einen Palettierer 13, aufgenommen und in Kartonlagen 14 auf der Palette 10 abgesetzt.

Der Palettierer ist in bekannter Weise ausgebildet, beispielsweise in der in der DE-Patentanmeldung 36 13 089.3 (Veröffeutlicht am 22.10.87) oder in der EP-A-0 268 153 (Veröffeutlicht am 25.5.88) beschriebenen Weise. Der hier schematisch dargestellte Palettierer besteht aus einem Traggestell 15 mit aufrechten Führungsstangen 16, 17. An diesen ist ein Tragschlitten 18 für einen Auslegerarm 19 auf- und abbewegbar gelagert. Die Führungsstangen 16, 17 sind in einem feststehenden Sockel 20 verankert.

Der Auslegerarm 19 ist schwenkbar am Tragschlitten 18 gelagert und darüber hinaus im Bereich von zwei Knickgelenken 21 und 22 abwinkelbar. Es entstehen dadurch einzelne, für sich schwenkbare Teilarme. Am freien Ende des so ausgebildeten Auslegerarms 19 ist eine Halterung für den zu fördernden Gegenstand angeordnet, nämlich ein Saughalter 23, der jeweils einen Karton 11 mit Saugluft an der Oberseite erfaßt und so hält.

Durch die Schwenkbarkeit und Abknickbarkeit des Auslegerarms 19 kann eine Vielzahl von Förderbewegungen des Saughalters 23 und damit des Kartons 11 durchgeführt werden. Die Kartons 11 können an jeder Stelle der Palette 10 abgesetzt werden, bis eine Kartonlage 14 komplettiert ist.

Für die Stabilisierung der Formation der Kartonlagen 14, aber auch aus anderen Gründen kann es erforderlich sein, dünne Zwischenlagen 24 zwischen übereinander angeordneten Kartonlagen 14 einzubringen. Diese Zwischenlagen 24 bestehen vorzugsweise aus Papier oder einem vergleichbaren Material. Sie erstrecken sich annähernd über die volle Fläche einer Kartonlage 14.

Bei der gezeigten Vorrichtung werden die Zwischenlagen 24 nach Fertigstellung einer Kartonlage 14 durch den Auslegerarm 19, und damit durch den Palettierer 13, aus einer Bereithalteposition auf die Oberseite einer Kartonlage 14 aufgebracht. Die Zwischenlage 24 wird dabei an ihrer Oberseite durch den Saughalter 23 erfaßt.

Eine weitere Besonderheit besteht darin, daß die Zwischenlagen 24 nacheinander von einer fortlaufenden Materialbahn 25 (Papierbahn) abgetrennt werden. Die Materialbahn 25 wird als Bobine 26 zur Verfügung gestellt. Diese lagert im unteren Bereich eines Aggregats 27 für die Bereitstellung und Zuführung der Materialbahn 25 zur Palette 10.

Das vorgenannte Aggregat 27 besteht aus einem festverankerten Tragsockel 28 und an diesem sind im Abstand voneinander aufrechte Tragstützen 29, 30 befestigt. Zwischen den Tragstützen 29, 30 befindet sich eine Halterung und Führung für die von der Bobine 26 abgezogene Materialbahn 25.

Bei dem gezeigten Ausführungsbeispiel wird die Materialbahn 25 auf einen horizontal gerichteten Tisch 31 gezogen. Dieser befindet sich im Bereich zwischen dem Aggregat 27 bzw. den Tragstützen 29, 30 desselben und der Palette 10 als Tragbrücke. Die Materialbahn 25 wird über eine Umlenkwalze 32 auf den Tisch 31 gefördert. Eine mit der Umlenkwalze 32 zusammenwirkende Gegenwalze 33 wird angetrieben. Die Materialbahn 25 wird durch Umlenkwalze 32 mit Gegenwalze 33 abschnittsweise auf den Tisch 31 bzw. zur Palette 10 gefördert.

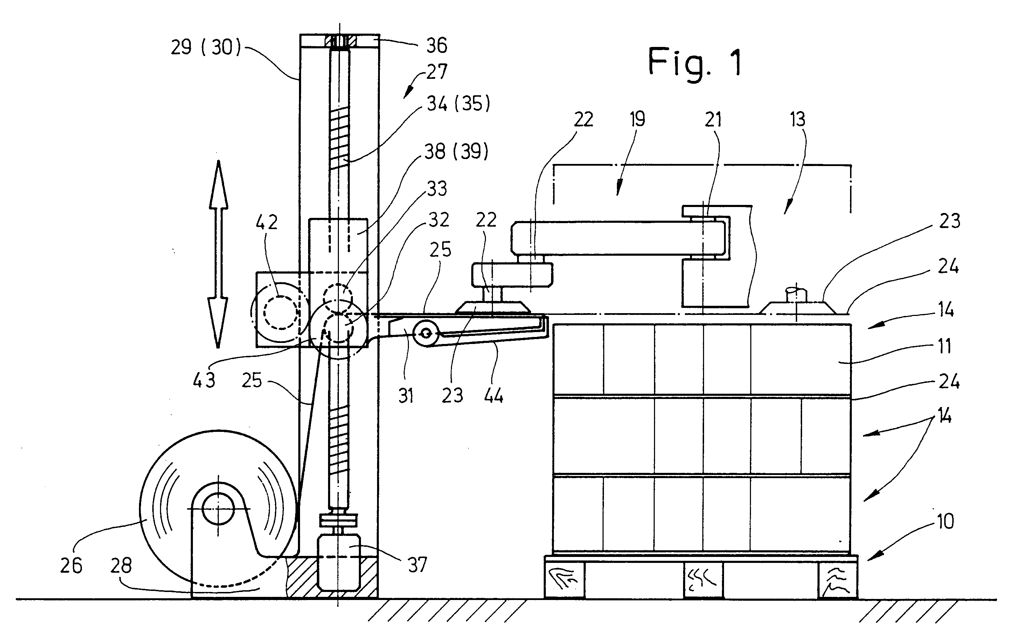

Der Tisch 31 wird auf die Oberseite der fertiggestellten Kartonlage 14 ausgerichtet, wie in Fig. 1 gezeigt, mit der Tischebene geringfügig oberhalb der Oberseite der Kartonlage 14 sich erstreckend. Zu diesem Zweck ist der Tisch 31 mit Umlenkwalze 32 und Gegenwalze 33 als Einheit auf- und abbewegbar am Aggregat 27 bzw. an dessen Tragstützen 29, 30 gelagert. Bei dem gezeigten Ausführungsbeispiel sind an den Seiten jeweils Hubspindeln 34, 35 gelagert. Die oberen Enden der Hubspindeln 34, 35 sind drehbar in einer quergerichteten Traverse 36 gehalten. Die unteren Enden sind im Tragsockel 28 verankert. Wenigstens eine der Hubspindeln 34, 35 ist durch einen Motor 37 angetrieben und mit der anderen Hubspindel über ein querlaufendes Getriebe verbunden. Je nach Drehrichtung wird eine Spindelkörper 38, 39 auf- oder abbewegt.

Der Tisch 31 ist über Seitenhalter 40, 41 mit den Spindelkörpern 38, 39 verbunden. Des weiteren sind Umlenkwalze 32 und Gegenwalze 33 drehbar in den Spindelkörpern 38, 39 gelagert. Des weiteren ist auf einem Spindelkörper 38 ein Antriebsmotor 42 mit Zahnradgetriebe 43 für die Gegenwalze 33 angebracht. Diese Einheit ist demnach zwischen den Tragstützen 29, 30 auf- und abbewegbar.

Zur Zuführung einer Zwischenlage 24 und Positionierung auf einer Kartonlage 14 wird ein auf dem Tisch 31 aufliegender freier Endbereich der Materialbahn 25 durch den Saughalter 23 erfaßt und durch entsprechende Schwenk- und Knickbewegungen des Auslegerarms 19 geradlinig über die Kartonlage 14 gezogen. Diese Vorzugbewegung der Materialbahn 25 durch den Auslegerarm 19 wird durch den Vortrieb von Umlenkwalze 32 bzw. Gegenwalze 33 unterstützt.

Die Materialbahn 25 wird positionsgenau auf der Kartonlage 14 abgelegt und sodann freigegeben. Danach kann im Bereich zwischen der Kartonlage 14 und dem Tisch 31 ein Trennschnitt durchgeführt werden, um die nunmehr gebildete Zwischenlage 24 vom nachfolgenden Teil der Materialbahn 25 abzutrennen. Es ist vorteilhafter, zunächst eine weitere Kartonlage 14 in der beschriebenen Weise auf der Zwischenlage 24 zu positionieren und erst nach deren Fertigstellung den Trennschnitt zu vollziehen. Durch die auf der Materialbahn 25 aufliegende weitere Kartonlage 14 wird die Zwischenlage 25 in ihrer Position fixiert.

Das Abtrennen der Zwischenlage 24 von der Materialbahn 25 kann in geeigneter Weise erfolgen. Bei dem gezeigten Ausführungsbeispiel ist an der Unterseite des Tisches 31 ein Schwenkmesser 44 angeordnet. Dieses tritt zur Durchführung eines Trennschnitts in einen zwischen der Kartonlage 14 und dem Rand des Tisches 31 gebildeten Spalt ein. Das Schwenkmesser 44 ist mit einer für derartige Zwecke bekannten sägezahnförmigen Schneidkante versehen.

Die so ausgebildete Vorrichtung ermöglicht die selbsttätige Beladung von Paletten 10 mit Zwischenlagen 24 ohne zusätzliches Beladungsaggregat bzw. ohne manuelle Einwirkung.

## Patentansprüche

1. Verfahren zum lagenweisen Beladen von Paletten (10) oder dergleichen mit stapelbaren Gegenständen, insbesondere Verpackungskartons (11), mit einem Palettierer (13), der einen insbesondere heb-, senk-, schwenkbaren und mit wenigstens einem Gelenk (21, 22) versehenen Auslegerarm (19) aufweist, an dessen freiem Ende ein Halteorgan, insbesondere ein Saughalter (23), zum Erfassen der Gegenstände angeordnet ist, wobei zwischen Lagen der Gegenstände Zwischenlagen (24), insbesondere aus Papier, eingebracht werden, welche jeweils nach Fertigstellung einer Lage aus Gegenständen positionsgerecht auf die fertige Lage aufgelegt werden, und wobei die Zwischenlagen (24) von einer Materialbahn (25), insbesondere Papierbahn, hergestellt werden, die von einer Bobine (26) über eine Umlenkstelle abgezogen wird, **dadurch gekennzeichnet,** daß die Umlenkstelle jeweils auf die Höhe der Ebene der fertiggestellten Lage der Gegenstände ausgerichtet wird.

2. Verfahren nach Anspruch 1, dadurch gekennzeichnet, daß die Materialbahn (25) bzw. die Zwischenlagen (24) in einer in Förderrichtung der Umlenkstelle nachgeordneten Position von dem Halteorgan erfaßt und positionsgerecht auf die fertige Lage der Gegenstände aufgelegt wird.

3. Verfahren nach Anspruch 1 oder 2, dadurch gekennzeichnet, daß die Materialbahn (25) abschnittsweise entsprechend der Größe der herzustellenden Zwischenlagen (24) durch den Auslegerarm (19) von der insbesondere ortsfest gelagerten Bobine (26) auf die Oberseite der abzudeckenden Lage der Gegenstände (Kartonlage 14) gezogen und sodann abgetrennt wird.

4. Verfahren nach einem oder mehreren der Ansprüche 1 bis 3, dadurch gekennzeichnet, daß die Materialbahn (25) zur Unterstützung der Abzugbewegung durch den Auslegerarm (19) taktweise um einen der Größe der Zwischenlage (24) entsprechenden Abschnitt angetrieben wird.

5. Vorrichtung zum lagenweisen Beladen von Paletten (10) oder dergleichen mit stapelbaren Gegenständen, insbesondere Verpackungskartons (11), mit einem Palettierer (13), der einen insbesondere heb- und senkbaren sowie schwenkbaren und mit wenigstens einem Gelenk (21, 22) versehenen Auslegerarm (19) aufweist, an dessen freiem Ende ein Halteorgan, insbesondere ein Saughalter (23), zum Erfassen der Gegenstände und insbesondere der Zwischenlagen (24) angeordnet ist, wobei in vorgegebener Relativstellung zu der zu beladenden Palette (10) eine Tragvorrichtung (Aggregat 27) für eine Bobine (26) einer Materialbahn (25) zum Abtrennen von Zwischenlagen (24) angeordnet ist, und wobei zur Führung der Materialbahn eine der Höhe nach bewegbare Umlenkwalze (32) vorgesehen ist, dadurch gekennzeichnet, daß die Umlenkwalze (32) Teil einer auf- und abwärts verstellbaren Einheit ist und mit dieser jeweils auf das Niveau der fertiggestellten Lage von Gegenständen einstellbar ist.

6. Vorrichtung nach Anspruch 5, dadurch gekennzeichnet, daß zwischen Umlenkwalze (32) und Palette (10) ein Führungstisch (Tisch 31) für die Materialbahn (25) angeordnet ist, der mit der Umlenkwalze (32) auf- und abbewegbar ist, wobei der Saughalter (23) des Auslegerarms (19) die Materialbahn (25) im Bereich des Tisches (31) erfaßt.

7. Vorrichtung nach Anspruch 6, dadurch gekennzeichnet, daß der Tisch (31) und die Umlenkwalze (32) an einem vertikal verfahrbaren Traggestell angeordnet sind, insbesondere an seitlichen Spindelkörpern (38, 39), die jeweils auf einer aufrechten Hubspindel (34, 35) bewegbar sind.

8. Vorrichtung nach Anspruch 5 sowie einem oder mehreren der weiteren Ansprüche, dadurch gekennzeichnet, daß im Bereich zwischen Tisch (31) und Palette (10) eine Bahntrennvorrichtung angeordnet ist, ein insbesondere an der Unterseite des Tisches (31) angeordnetes Schwenkmesser (44).

9. Vorrichtung nach Anspruch 8, dadurch gekennzeichnet, daß das Schwenkmesser (44) nach Anordnung einer Lage von Gegenständen (Kartonlage 14) auf der Materialbahn (25) bzw. der Zwischenlage (24) betätigbar ist.

## Claims

1. Process for the loading of pallets (10) or the like in layers with stackable articles, especially packaging cartons (11), with a palletizer (13) having an in particular raisable, lowerable and pivotable cantilever arm (19) which is equipped with at least one joint (21, 22), on the free end of which a holding member, especially a suction holder (23), for grasping the articles, is arranged, intermediate layers (24) consisting especially of paper being introduced between layers of the articles, which intermediate layers (24) are laid onto the finished layer of articles in the correct position after a particular layer of articles has been completed, and the intermediate layers (24) being produced from a web of material (25), especially a paper web, which is drawn off from a reel (6) via a deflection point, characterized in that the deflection point is respectively oriented level with the plane of the finished layer of articles.

2. Process according to Claim 1, characterized in that the web of material (25) or the intermediate layers (24) is/are grasped by the holding member in a position following the deflection point of the conveying direction and is/are laid onto the finished layer of articles in the correct position.

3. Process according to Claim 1 or 2, characterized in that the web of material (25) is drawn by the cantilever arm (19), in portions corresponding to the size of the intermediate layers (24) to be produced, from the particularly fixedly mounted reel (26) onto the topside of the layer of articles (carton layer 14) to be covered and is then severed.

4. Process according to one or more of Claims 1 to 3, characterized in that, in order to assist the drawing-off movement by the cantilever arm (19), the web of material (25) is driven intermittently through a portion corresponding to the size of the intermediate layer (24).

5. Apparatus for the loading of pallets (10) or the like in layers with stackable articles, especially packaging cartons (11), with a palletizer (13) having an in particular raisable, lowerable and pivotable cantilever arm (19) which is equipped with at least one joint (21, 22), on the free end of which a holding member, especially a suction holder (23), for grasping the articles and in particular the intermediate layers (24), is arranged, a supporting device (unit 27) for a reel (26) of a web of material (25) being arranged, for the severing of intermediate layers (24), in a predetermined relative position in relation to the pallet (10) to be loaded, and a vertically movable deflecting roller (32) being provided for guiding the web of material, characterized in that the defecting roller (32) is part of a unit adjustable upwards and downwards and can be respectively set by means of the latter at the level of the finished layer of articles.

6. Apparatus according to Claim 5, characterized in that arranged between the deflecting roller (32) of the pallet (10) is a guide table (table 31) for the web of material (25) which can be moved up and down together with the deflecting roller (32), the suction holder (23) of the cantilever arm (19) grasping the web of material (25) in the region of the table (31).

7. Apparatus according to Claim 6, characterized in that the table (31) and the deflecting roller (32) are arranged on a vertically movable supporting structure, especially on lateral spindle bodies (38, 39) which are each movable on a vertical lifting spindle (34, 35).

8. Apparatus according to Claim 5 and one or more of the further claims, characterized in that a web-severing device, a pivoting knife (44) especially arranged on the underside of the table (31), is located in the region between the table (31) and the pallet (10).

9. Apparatus according to Claim 8, characterized in that the pivoting knife (44) can be actuated after a layer of articles (carton layer 14) has been arranged on the web of material (25) or the intermediate layer (24).

## Revendications

1. Procédé de chargement par couches de palettes (10) ou analogues, avec des objets empilables, en particulier des cartons d'emballage (11), avec un palettiseur (13), présentant un bras articulé (19), capable en particulier d'effectuer des mouvements de levage, abaissement et pivotement, et pourvu d'au moins une articulation (21, 22), bras articulé (19) à l'extrémité libre duquel est disposé un organe de retenue, en particulier un préhenseur à ventouse (23), destiné à saisir les objets, des couches intermédiaires (24), en particulier en papier, étant introduites entre les couches d'objets et posées sur la couche terminée, à la position correcte, chaque fois après achèvement de la pose d'une couche d'objets, et les couches intermédiaires (24) étant constituées d'une bande de matériau (25), en particulier d'une bande de papier, tirée d'une bobine (26) en passant par un point de déviation, caractérisé en ce que le point de déviation est chaque fois placé au niveau du plan de la couche d'objets terminée.

2. Procédé selon la revendication 1, caractérisé en ce que la bande de matériau (25), ou les couches intermédiaires (24) sont saisies par l'organe de retenue dans une position placée en aval du point de déviation, dans la direction de transport, et placée en position correcte sur la couche d'objets terminée.

3. Procédé selon la revendication 1 ou 2, caractérisé en ce que la bande de matériau (25) est extraite et ensuite séparée par tronçons, en fonction de la taille des couches intermédiaires (24) à constituer, au moyen du bras articulé (19), depuis la bobine (26) tourillonnant en particulier en un point localement fixe, et placée sur la face supérieure de la couche d'objets à recouvrir (couche de carton 14).

4. Procédé selon l'une ou plusieurs des revendications 1 à 3, caractérisé en ce que la bande de matériau (25) est entraînée, pour assister le mouvement d'extraction par le bras articulé (19), l'entraînement s'effectuant de façon cadencée, de la valeur d'un tronçon correspondant à la taille de la couche intermédiaire (24).

5. Dispositif de chargement par couches de palettes (10) ou analogues, avec des objets empilables, en particulier des cartons d'emballage (11), avec un palettiseur (13), présentant un bras articulé (19), capable en particulier d'effectuer des mouvements de levage, abaissement et pivotement, et pourvu d'au moins une articulation (21, 22), bras articulé (19) à l'extrémité duquel est disposé un organe de retenue, en particulier un préhenseur à ventouse (23), destiné à saisir les objets, un dispositif support (groupe 27) destiné à une bobine (26) d'une bande de matériau (25), étant disposé en une position relative prédéterminée par rapport à la palette (10) à charger, en vue d'opérer la séparation des couches intermédiaires (24), et un rouleau de renvoi (32), déplaçable pour changer de niveau, étant prévu pour assurer le guidage de la bande de matériau, caractérisé en ce que le rouleau de renvoi (32) fait partie d'une unité déplaçable en montée et en descente et est réglable avec cette unité, chaque fois au niveau de la couche d'objets terminée.

6. Procédé selon la revendication 5, caractérisé en ce qu'entre le rouleau de renvoi (32) et la palette (10) est disposée une table de guidage (table 31), pour la bande de matériau (25), susceptible d'être levée et abaissée avec le rouleau de renvoi (32), le préhenseur à ventouse (23) du bras articulé (19) saisissant la bande de matériau (25) dans la zone de la table (31).

7. Procédé selon la revendication 6, caractérisé en ce que la table (31) et le rouleau de renvoi (32) sont disposés sur un bâti support, déplaçable verticalement, en particulier sur des corps à broche (38, 39) latéraux, déplaçable chaque fois sur une broche de levage (34, 35) verticale.

8. Procédé selon la revendication 5, caractérisé en ce que dans la zone entre table (31) et palette (10) est disposé un dispositif de séparation de bande, en particulier une lame pivotante (44) disposée en face inférieure de table (31).

9. Procédé selon la revendication 8, caractérisé en ce que la lame pivotante (44) est actionnable après disposition d'une couche d'objets (couche de carton 14) pour agir sur la bande de matériau (25), ou la couche intermédiaire (24).
